# DEMANDE DE BREVET EUROPEEN

(11) **EP 1 625 886 A1**
(43) Date de publication de la demande: **15.02.2006**
(21) Numéro de dépôt: 04103903.3
(22) Date de dépôt: 12.08.2004
(51) Int. Cl.: B01F 3/04, C02F 3/06, C02F 3/20, B01J 8/02, B01J 4/00

(54) **Dispositif de dépose d'aérateurs pour stations d'épuration sans dépose du lit fixe**

(71) Demandeur: EPUR S.A., 4460 Grace-Hollogne (BE)
(72) Inventeur: Hartenstein, Marcel, 4122 Plainevaux (BE)
(74) Mandataire: Kihn, Pierre Emile Joseph

(57) **Abrégé**

La présente invention propose un réacteur aérobie comprenant un lit fixe servant de support à des micro-organismes aérobies et un ou plusieurs dispositifs d'aération comprenant chacun une rampe d'aération servant à l'alimentation en air et raccordée à leur extrémité inférieure à une tête d'aérateur située en dessous du lit fixe, réacteur caractérisé en ce que le lit fixe présente une tranchée suffisamment large sur toute sa hauteur pour permettre l'introduction ou le retrait des dispositifs d'aération. L'invention propose en outre un procédé de placement de ces dispositifs d'aération sans dépose du lit fixe.

## Description

La présente invention concerne un réacteur aérobie permettant la dépose d'aérateurs sans dépose du lit fixe, notamment pour stations d'épuration.

Les réacteurs aérobies à lit fixe sont largement utilisés pour toutes sortes d'applications microbiologiques, qu'il s'agisse de dégradations d'effluents industriels ou domestiques ou même de synthèses de produits à (haute) valeur ajoutée à l'aide de souches spécifiques de micro-organismes sélectionnés ou même modifiés génétiquement.

L'épuration des eaux domestiques peut être réalisée grâce à des stations d'épuration qui comprennent généralement plusieurs cuves ou compartiments. L'eau passe successivement par les compartiments intégrant chacun une fonction différente, par exemple le dégraissage des eaux, la dégradation microbiologique, la décantation, etc.

La dégradation microbiologique dans ces stations d'épuration est généralement réalisée au moyen d'un compartiment ou réacteur aérobie à lit fixe immergé, dans lequel les micro-organismes peuvent se fixer sur un support structuré. Pour obtenir une épuration conforme à la réglementation, une aération ou oxygénation de ce lit est indispensable.

Une façon de procéder à l'oxygénation de réacteurs aérobies est l'injection d'air via un dispositif de micro-bullage ou d'aérateurs fines bulles placé sous le support de micro-organismes, c'est-à-dire sous le lit fixe. Ces dispositifs d'aération par micro-bullage ou aérateurs comportent habituellement soit une rampe tubulaire micro-perforée, soit un disque micro-perforé, servant à produire des bulles d'air de faible diamètre. L'objectif est de garantir une importante surface d'échange air-eau et une bonne répartition des bulles à l'intérieur du lit.

Or la performance de ces aérateurs diminue inévitablement dû au vieillissement du dispositif, par la dégradation du matériau utilisé, par le bouchage progressif des micro-perforations ou même par d'éventuelles détériorations accidentelles. Le remplacement inévitable des aérateurs défectueux ou leur entretien éventuel exige cependant la dépose du lit fixe, c'est-à-dire le démontage et le retrait du support de bactéries pour pouvoir accéder au dispositif d'aération et le remplacer par un nouveau ou le nettoyer le cas échéant.

Dans le cas de souches spécifiquement sélectionnées ou modifiées par génie génétique, cette dépose du lit fixe est d'autant plus dommageable, tant en terme d'arrêt de la production, qu'en terme de risque de destruction ou de contamination du lit existant.

Outre la mise hors service forcée, la main d'oeuvre importante et d'autres nuisances, par exemple olfactives pour le traitement des eaux usées, qui sont associées à une telle opération de remplacement et/ou de nettoyage, celle-ci exige la vidange du moins partielle du réacteur ou de la microstation d'épuration et une perte de performance du moins temporaire due à la dépose préalable et de la régénération du lit bactérien.

Il serait donc utile de pouvoir procéder à la dépose d'un ou de plusieurs aérateurs défectueux sans devoir procéder à la dépose et à la repose du lit bactérien.

La présente invention propose par conséquent un réacteur aérobie comprenant un lit fixe servant de support à des micro-organismes aérobies et un ou plusieurs dispositifs d'aération comprenant chacun une rampe d'aération servant à l'alimentation en air et raccordée à leur extrémité inférieure à une tête d'aérateur située en dessous du lit fixe. Le réacteur conforme à la présente invention est caractérisé en ce que le lit fixe présente une tranchée de section appropriée sur toute la hauteur du lit fixe pour permettre l'introduction ou le retrait des dispositifs d'aération.

La position de la tranchée dans le lit fixe est déterminée par l'emplacement des dispositifs d'aération lorsque ceux-ci sont en place et par la forme du réacteur. Dans le cas d'un réacteur cylindrique, par exemple la position de la tranchée sera de préférence radiale. Les dimensions de la tranchée dépendent d'une part de la taille du réacteur choisi et d'autre part de la taille des aérateurs utilisés. Pour faciliter l'introduction ou le retrait des dispositif d'aération, on veillera à choisir une section transversale de la tranchée suffisamment grande, ayant une longueur de préférence de 1,1 à 1,5 fois la longueur maximale, respectivement une largeur de préférence de 1,5 à 2 fois la largueur maximale de la partie inférieure du dispositif d'aération destinée à être positionnée sous le lit fixe.

Comme mentionné ci-dessus, le réacteur aérobie fait de préférence partie d'une station d'épuration des eaux domestiques. Néanmoins, la présente invention est applicable à tout processus impliquant la mise en oeuvre d'un réacteur aérobie à lit fixe.

Les avantages de l'invention sont multiples et l'importance respective de ces atouts dépend fortement de l'application envisagée. Ainsi, les critères retenus pour une installation d'épuration des eaux domestiques n'auront pas la même priorité que pour la production industrielle d'une substance à haute valeur ajoutée.

Cela dit, l'avantage principal de la présente invention est l'inutilité d'une dépose préalable et de la repose subséquente du lit bactérien lors du remplacement des dispositifs d'aération. Toute vidange, même partielle, est superflue. L'invention permet donc de réduire significativement les frais de remplacement des aérateurs et le temps mort de l'installation.

D'autre part, la dépose des dispositifs d'aération est rapide et facile à réaliser, sans que l'installateur ou même l'utilisateur ne doive s'exposer à d'inutiles nuisances olfactives et autres. En cas de risque de contamination du lit bactérien (pour les applications utilisant des souches spécifiques), il suffira de prendre les précautions et de suivre les consignes de stérilisation sinon habituelles, par exemple par désinfection des dispositifs d'aération avant leur pose.

En outre, la simplicité de la manipulation permet également un contrôle plus simple et donc plus fréquent de l'état des têtes d'aérateurs. Pour ce faire, il suffit de faire tourner chaque dispositif d'aération autour de l'axe longitudinal de sa rampe d'aération jusqu'à aligner la tête d'aérateur avec l'emplacement de la tranchée et de le retirer suivant le même axe longitudinal au travers de la tranchée du lit fixe, d'en vérifier individuellement l'état de fonctionnement et de les nettoyer ou de les remplacer le cas échéant, directement et sur place, sans devoir attendre une perte de performance suffisamment importante pour justifier la dépose du lit et les coûts que celle-ci engendre.

Un avantage supplémentaire et non-négligeable pour l'usager final, est que les coûts d'acquisition d'un réacteur selon l'invention sont tout à fait comparables à un réacteur aérobie de conception classique, mais l'invention permet d'en réduire drastiquement les frais de fonctionnement et d'entretien.

Dans une forme de réalisation préférée, le réacteur comprend en outre un collecteur d'air auquel est raccordée l'extrémité supérieure de chaque rampe d'aération. Le collecteur d'air, qui est de préférence de forme grossièrement cylindrique, est lui-même raccordé à un surpresseur chargé d'alimenter en air les dispositifs d'aération et présente sur sa face inférieure un nombre variable de connecteurs en fonction du nombre souhaité de dispositifs d'aération à raccorder.

Dans un mode de réalisation préféré, un certain nombre de connecteurs libres peut également être prévu afin de permettre de faire évoluer la capacité de dégradation du réacteur, c'est-à-dire par l'ajout (ou d'ailleurs le retrait) d'un ou de plusieurs dispositifs d'aération. Il est également possible de remplacer le collecteur d'air initial par un modèle ayant plus de connecteurs au cas où cela s'avérerait nécessaire. Le présent système est par conséquent très flexible dans le sens où il est possible d'adapter, à tout moment, même a posteriori, le nombre des dispositifs d'aération à la capacité ou à la charge du réacteur aérobie.

Le positionnement correct des dispositifs d'aération à l'intérieur du réacteur est primordial pour le bon fonctionnement du réacteur. Par conséquent, il est préférable de prévoir un moyen de fixation spécifique pour éviter qu'ils ne se déplacent, se détachent du collecteur et tombent dans le réacteur. Afin de maintenir les dispositifs d'aération en place à l'intérieur du réacteur, le réacteur selon l'invention, comprend donc de préférence en outre un axe de fixation posé sur une structure autoportante pour la fixation du collecteur et/ou des rampes d'aération.

Bien que la fixation des dispositifs d'aération puisse être suffisante uniquement de par leur connexion à un collecteur ainsi fixé, il sera généralement souhaitable d'attacher outre le collecteur également les rampes d'aération, surtout pour les réacteurs de dimensions plus importantes.

L'avantage d'une telle configuration est qu'il devient ainsi possible de garantir que la distance des têtes d'aérateurs entre le fond du réacteur et le bas du lit fixe et l'espacement entre les têtes d'aérateurs peuvent être fixés de façon appropriée, conditions essentielles pour un fonctionnement optimal du réacteur.

Dans le cas d'une fixation des rampes d'aération sur l'axe, celle-ci doit être réalisée de façon amovible afin de pouvoir retirer et introduire un à un les dispositifs d'aération. Toute méthode de fixation appropriée peut en fait être utilisée, notamment au moyen de brides, de clips, de languettes ou par boulonnage. D'autre part, afin de permettre un accès aisé lors de l'entretien, cette fixation se situera à une hauteur accessible par l'utilisateur, par exemple au-dessus du lit fixe et de préférence au-dessus du niveau des eaux à épurer.

Dans un mode de réalisation préféré de l'invention, la fixation des rampes d'aération sur l'axe de fixation est réalisée au moyen d'un dispositif de fixation amovible situé au-dessus du lit fixe. Un dispositif de fixation amovible préféré comprend des ailettes verticales avec orifice sur la rampe d'aération et l'axe central pour le boulonnage au moyen de boulons inoxydables. Le nombre et le positionnement de ces fixations sera généralement déterminé par le nombre et la position des connecteurs prévus sur la face inférieure du collecteur d'air. De préférence, ces fixations s'étendent radialement par rapport à l'axe de fixation central et permettent un accès facile et un (dé)montage rapide.

Comme expliqué ci-dessus, l'aérateur est introduit dans le réacteur en alignant d'abord sa tête d'aérateur avec la tranchée prévue dans le lit fixe, finalement l'aérateur est tourné pour positionner correctement sa tête d'aérateur. Dans le cas d'une fixation par bride permettant de choisir librement l'orientation de la tête, il peut être avantageux de disposer d'une marque sur la rampe d'aération permettant de déduire à tout moment l'orientation de la tête d'aérateur, même lorsque celle-ci se trouve en dessous du lit fixe immergée dans les eaux à épurer. Cette marque peut être uniquement visuelle, mais sera de préférence visuelle et tactile, de façon à pouvoir la détecter même dans la pénombre à l'intérieur du réacteur ou, le cas échéant sous la surface de l'eau.

Les dispositifs d'aération sont fabriqués en matériaux inaltérables afin de résister aux eaux agressives dans lesquelles ils seront placés. Les rampes d'aération peuvent être des tubes en matière synthétique, de préférence en polyéthylène, en polypropylène ou en toute autre matière appropriée pour un tel usage. Les connexions éventuelles, par exemple entre les rampes et les têtes de micro-bullage, peuvent également être constituées de matières synthétiques, telles que celles citées ci-dessus, ou bien en tout autre matériau inaltérable approprié, par exemple en acier inoxydable.

La nature des têtes d'aérateur ou de micro-bullage n'est pas critique dans la mesure où leurs caractéristiques techniques sont appropriées pour l'utilisation considérée. Il s'agit d'une manière générale de diffuseurs de type connu, par exemple des diffuseurs en matériaux composites micro-poreux, à membrane (EPDM, silicone, etc., de préférence EPDM), en céramique ou à fente, sous forme de disques ou, préférentiellement, sous forme cylindrique ou tubulaire.

Un autre aspect de la présente invention propose un procédé de placement d'un dispositif d'aération dans un réacteur aérobie à lit fixe comprenant une tranchée de section appropriée sur toute la hauteur du lit fixe, sans dépose du lit fixe, comprenant les étapes de
a) positionnement du dispositif d'aération, comprenant une rampe d'aération servant à l'alimentation en air raccordée à l'extrémité inférieure à une tête d'aérateur, au-dessus du lit fixe de manière à aligner sa tête d'aérateur avec la tranchée,
b) abaissement du dispositif d'aération suivant l'axe de sa rampe d'aération au travers de la tranchée de manière à placer sa tête d'aérateur au dessous du niveau inférieur du lit fixe,
c) positionnement de la tête d'aérateur du dispositif d'aération à l'endroit souhaité en-dessous du lit fixe par rotation du dispositif d'aération autour de l'axe longitudinal de sa rampe d'aération et
d) branchement du dispositif d'aération à l'alimentation en air.

Le procédé présenté peut en outre comprendre des étapes supplémentaires comme la fixation éventuelle de l'aérateur au moyen d'un dispositif de fixation, par exemple celui présenté précédemment.

Le retrait d'un dispositif d'aération usé peut évidemment être réalisé de la même manière en inversant logiquement l'ordre des étapes présentées ci-dessus.

Par conséquent, la présente invention propose un procédé simple et rapide pour le remplacement d'aérateurs usés ou endommagés par des nouveaux aérateurs sans que le procédé ne nécessite la dépose préalable du lit fixe, mais en bénéficiant des avantages mentionnés plus haut.

D'autres particularités et caractéristiques de l'invention ressortiront de la description détaillée de quelques modes de réalisation avantageux présentés ci-dessous, à titre d'illustration, en référence aux dessins annexés, où
la Figure 1 présente une vue en coupe d'un réacteur aérobie selon une forme de réalisation avantageuse de l'invention,
la Figure 2 présente le réacteur de la Figure 1 vu par le dessus, et
la Figure 3 est une vue montrant une forme de réalisation avantageuse du dispositif de fixation boulonné amovible situé au-dessus du lit fixe et servant à fixer les dispositifs d'aération,
les Figure s 4 et 5 présentent, de face et en coupe, un détail du dispositif de fixation amovible 8 tel que présenté à la Figure 3, au niveau de l'axe, respectivement de la rampe d'aération.

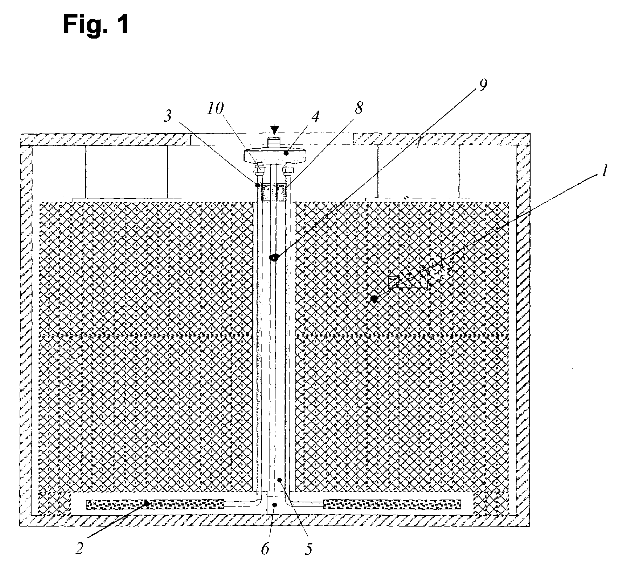

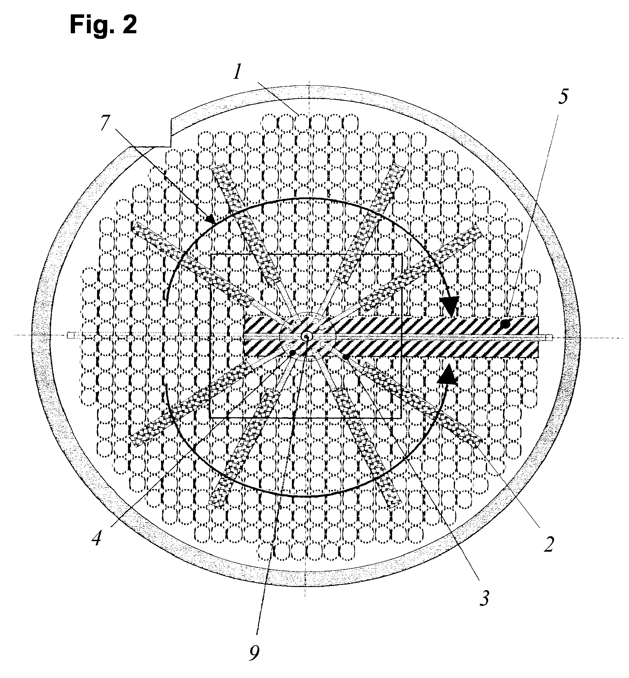

Les Figures 1 et 2 représentent un réacteur aérobie comprenant un lit fixe 1 servant à permettre la fixation des micro-organismes. Une tranchée radiale 5 est prévue dans le lit fixe 1 de façon à permettre la dépose et la repose des aérateurs formés d'une tête d'aérateur 2 reliée à une rampe 3. Les dimensions et la forme de la tranchée ne sont critiques que dans la mesure où elles permettent le passage des aérateurs, sans pour autant réduire de façon significative le volume utile du lit fixe. Le retrait d'un aérateur est effectué en défaisant le dispositif de fixation 8 et en déconnectant l'aérateur au niveau du connecteur 10 en dessous du collecteur d'air 4. L'aérateur est ensuite tourné autour de l'axe de sa rampe d'aération 3 suivant le mouvement indiqué par la flèche 7 (Fig. 2) de manière à aligner la tête 2 de l'aérateur en dessous de la tranchée 5. Il suffit ensuite de tirer l'aérateur vers le haut pour le retirer du réacteur.

La répartition des têtes d'aérateur 2 en dessous du lit fixe est de préférence régulière, de manière a obtenir une oxygénation la plus homogène possible dans le lit fixe 1. Leur nombre (huit dans l'exemple illustré) dépend de la taille et de la capacité d'épuration souhaitée (ou charge) du réacteur et peut être varié, par exemple en connectant des aérateurs supplémentaires aux connecteurs 10 libres du collecteur d'air 4 ou en retirant les dispositifs en surnombre.

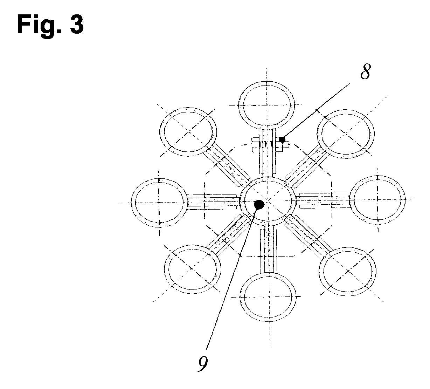

La Figure 3 présente un mode de réalisation avantageux d'un dispositif de fixation amovible des aérateurs à l'intérieur du réacteur aérobie. Ce dispositif servant à maintenir les aérateurs en place est de préférence prévu dans la partie supérieure de l'axe central 9 au-dessus du niveau du lit fixe, respectivement du niveau des eaux.

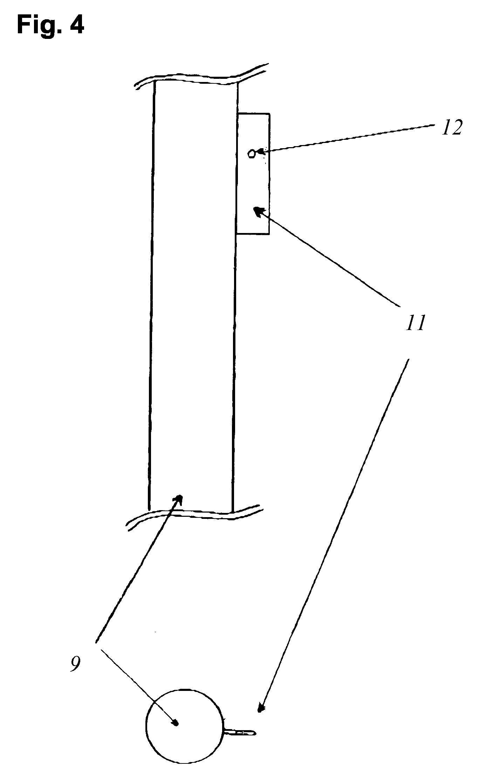

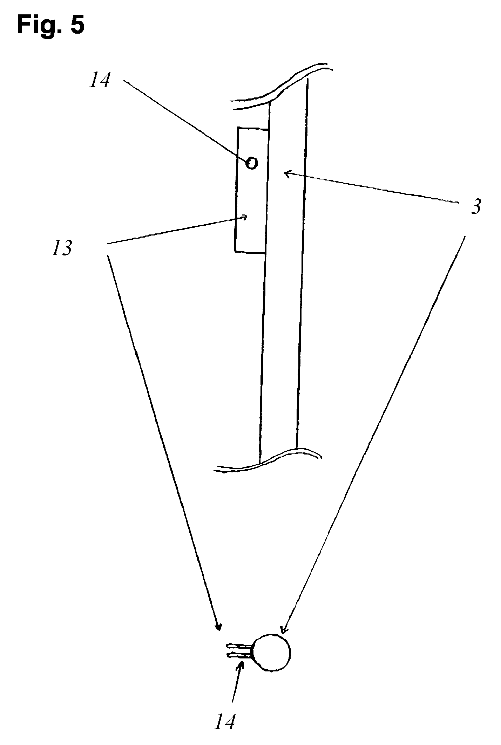

La Figure 4 présente la partie du dispositif de fixation de la Figure 3 se trouvant sur l'axe central 9. L'axe 9 est fixe et est muni d'ailettes verticales 11 sur toute sa circonférence (seule une ailette étant représentée) avec un orifice de boulonnage 12, sur lesquelles sont fixés les rampes d'aération (voir Figure 5).

La Figure 5 présente la contrepartie du dispositif de fixation se trouvant sur la rampe d'aération 3. Chaque rampe 3 est munie d'une ou de deux ailettes 13 de préférence diamétralement opposée(s) à la tête d'aérateur. Cette ailette 13 sera fixée à l'ailette 11 de l'axe central 9 via l'orifice 14 prévu à cet effet au moyen d'un boulon en acier inoxydable (non représenté). Les ailettes 13 des rampes 3 viennent se positionner en butée contre l'axe central 9 de manière à positionner ainsi correctement l'assiette horizontale des diffuseurs fines bulles sous le lit fixe.

| Liste des références (Fig. 1 à 5) | |
|---|---|
| 1 | lit fixe |
| 2 | tête d'aérateur |
| 3 | rampe d'aération |
| 4 | collecteur d'air |
| 5 | tranchée |
| 6 | structure autoportante |
| 7 | sens de rotation des têtes d'aérateur |
| 8 | dispositif de fixation |
| 9 | axe de fixation |
| 10 | connecteur |
| 11 | ailette verticale de l'axe |
| 12 | orifice de boulonnage de l'ailette de l'axe |
| 13 | ailettes verticales de la rampe d'aération |
| 14 | orifice de boulonnage de l'ailette de la rampe d'aération |

## Revendications

1. Réacteur aérobie comprenant
- un lit fixe servant de support à des micro-organismes aérobies et
- un ou plusieurs dispositifs d'aération comprenant chacun une rampe d'aération servant à l'alimentation en air et raccordée à leur extrémité inférieure à une tête d'aérateur située en dessous du lit fixe,
**caractérisé en ce que** le lit fixe présente une tranchée de section appropriée sur toute la hauteur du lit fixe pour permettre l'introduction ou le retrait des dispositifs d'aération.

2. Réacteur selon la revendication 1, comprenant en outre un collecteur d'air auquel est raccordée l'extrémité supérieure de chaque rampe d'aération.

3. Réacteur selon la revendication 2, comprenant en outre un axe de fixation posé sur une structure autoportante pour la fixation du collecteur d'air et/ou des rampes d'aération.

4. Réacteur selon la revendication 3, **caractérisé en ce que** la fixation des rampes d'aération sur l'axe de fixation est réalisée au moyen d'un dispositif de fixation amovible situé au dessus du lit fixe.

5. Procédé de placement d'un dispositif d'aération dans un réacteur aérobie à lit fixe comprenant une tranchée de section appropriée sur toute la hauteur du lit fixe, sans dépose du lit fixe, comprenant les étapes de
a) positionnement du dispositif d'aération, comprenant une rampe d'aération servant à l'alimentation en air raccordée à l'extrémité inférieure à une tête d'aérateur, au-dessus du lit fixe de manière à aligner sa tête d'aérateur avec la tranchée,
b) abaissement du dispositif d'aération suivant l'axe de sa rampe d'aération au travers de la tranchée de manière à placer sa tête d'aérateur au dessous du niveau inférieur du lit fixe,
c) positionnement de la tête d'aérateur du dispositif d'aération à l'endroit souhaité en-dessous du lit fixe par rotation du dispositif d'aération autour de l'axe longitudinal de sa rampe d'aération et
d) branchement du dispositif d'aération à l'alimentation en air.
